# EUROPÄISCHE PATENTSCHRIFT

(11) **EP 3 086 334 B1**
(45) Veröffentlichungstag und Bekanntmachung des Hinweises auf die Patenterteilung: **28.02.2018**
(21) Anmeldenummer: 16000597.1
(22) Anmeldetag: 12.03.2016
(51) Int. Cl.: H01F 7/122, H01F 7/16, H01F 7/06, F16K 31/08, F16K 31/06

(54) **BISTABILES MAGNETVENTIL FÜR EIN FLUIDSYSTEM, MAGNETVENTIL-EINRICHTUNG UND VERFAHREN ZUM SCHALTEN DES MAGNETVENTILS**
BISTABLE SOLENOID VALVE FOR A FLUID SYSTEM, SOLENOID VALVE DEVICE AND METHOD FOR SWITCHING THE SOLENOID VALVE
ÉLECTROVANNE BISTABLE POUR UN SYSTEME DE FLUIDE, DISPOSITIF D'ELECTROVANNE ET PROCEDE DE COMMUTATION DE L'ELECTROVANNE

(30) Priorität: 25.04.2015 DE 102015005369
(43) Veröffentlichungstag der Anmeldung: 26.10.2016
(73) Patentinhaber: WABCO GmbH, 30453 Hannover (DE)
(72) Erfinder: Teichmann, Andreas, 30916 Isernhagen (DE)

(56) Entgegenhaltungen:
- DE-A- 3 905 992
- DE-A1- 2 208 218
- US-A- 4 310 143

## Beschreibung

Die Erfindung betrifft ein bistabiles Magnetventil für ein Fluidsystem, insbesondere ein Druckluftsystem in einem Fahrzeug, eine Magnetventil- Einrichtung mit dem Magnetventil und ein Verfahren zum Schalten einer derartigen Magnetventil-Einrichtung.

Als bistabiles Magnetventil kann insbesondere ein 3/2-Wegeventil vorgesehen sein, das einen ersten Druckausgang in einer ersten Stellung bzw. ersten Ankerstellung an einen zweiten Druckausgang legt, um eine Druckausgangsleitung zu entlüften bzw. mit Atmosphäre zu verbinden; hierbei ist ein Druckeingang gesperrt. In einer zweiten Stellung wird der Druckeingang mit dem ersten Druckausgang verbunden, z. B. zur pneumatischen Versorgung einer Druckluft-Bremse. Der zweite Druckausgang ist hierbei gesperrt.

Somit sind durch das Magnetventil zwei Stellungen ausbildbar. Bei einem bistabilen Magnetventil werden beide Stellungen im stromlosen Zustand durch eine Permanentmagnet-Einrichtung sicher gehalten, wobei eine Elektromagneteinrichtung für die Schaltvorgänge vorgesehen ist.

Die DE 37 30 381 A1 zeigt ein derartiges bistabiles Magnetventil, das in beiden Stellungen eine Dauermagnet-Haltekraft ermöglicht. Hierbei ist ein Anker mit zwei zu seinen axialen Enden hin ausgebildeten Dichtmitteln axial verschiebbar und stößt in seinen beiden Stellungen an einen ersten Endkern oder zweiten Endkern, wobei er in jeder der Stellungen mit seinem jeweiligen Dichtmittel an dem jeweiligen Endkern einen Fluiddurchlass verschließt. Ein Dauermagnet ist vorgesehen, um ein magnetisches Feld über ein äußeres magnetisches Joch und die Endkerne zu dem Anker hin zu schließen. Je nach Ausbildung des Luftspaltes ist ein erstes Permanentmagnetfeld über den ersten Kern oder ein zweites Permanentmagnetfeld über den zweiten Kern stärker oder schwächer als das jeweils andere Permanentmagnetfeld. Zum Umschalten der stabilen Stellungen wird entweder eine erste Spule oder eine zweite Spule bestromt, die jeweils eines der beiden Permanentmagnetfelder soweit verstärkt, dass es trotz der Ausbildung des Luftspaltes die Magnetschaltekraft des anderen Permanentmagnetfeldes übersteigt und somit ein Umschalten in die andere stabile Endstellung ermöglicht.

Zur Ausbildung der Elektromagnetfelder ist jedoch eine hohe Anzahl Amperewindungen erforderlich, so dass großdimensionierte Spulen mit erheblichen Herstellungskosten erforderlich sind und die Schaltgeschwindigkeit begrenzt ist.

Die US 7,483,254 B1 zeigt eine Steuerschaltung für eine bistabile Permanentmagneteinrichtung, bei der eine Ansteuerung über gepulste Signale, insbesondere mit RC-Gliedern erfolgt.

Die EP 0 328 194 A1 beschreibt einen bistabilen Ventil-Mechanismus mit einer Federvorspannung, die durch Bestromung überwunden werden kann.

Der Erfindung liegt die Aufgabe zugrunde, ein bistabiles Magnetventil und ein Verfahren zum Schalten des Magnetventils zu schaffen, die bei geringem Aufwand eine sichere und schnelle Umschaltung zwischen seinen Stellungen ermöglichen.

Diese Aufgabe wird durch ein Magnetventil nach Anspruch 1 und eine Magnetventil-Einrichtung mit dem Magnetventil gelöst. Weiterhin ist ein Verfahren zum Schalten bzw. zur Ansteuerung des Magnetventils vorgesehen. Das Verfahren kann insbesondere unter Verwendung der Magnetventil- Einrichtung erfolgen.

Das Magnetventil weist eine Permanentmagnet-Einrichtung mit radialer Magnetisierung auf. Somit verläuft ein Permanentmagnetfeld in radialer Richtung von dem inneren Anker über den Permanentmagneten und ein äußeres magnetisches Joch, wobei sich zwei Permanentmagnetfelder ausbilden, die von dem Joch entweder an einem axialen Ende über den ersten Kern zu dem Anker, oder an dem anderen Ende über den zweiten Kern zu dem Anker verlaufen, wobei in jeder der beiden Stellungen jeweils ein axialer Luftspalt von dem Anker zu einem der beiden Kerne vorgesehen ist.

Die Permanentmagnet-Einrichtung kann zum einen ringförmig ausgebildet sein, d. h. als Ring oder Scheibe, die - anders als übliche Magnete - in radialer Richtung aufmagnetisiert ist.

Indem die Permanentmagnet-Einrichtung radial außerhalb des Ankers liegt, insbesondere in axialer Richtung zwischen den beiden Spulen der beiden Elektromagnet-Einrichtungen, steht ein größerer Bauraum zur Verfügung, so dass hier auch Materialien eingesetzt werden können, die eine größere axiale Erstreckung ermöglichen und somit kostengünstiger sind als z. B. Selten-Erd-Materialien.

Alternativ zu einer Scheibe können auch mehrere z. B. stabförmige Permanentmagnete eingesetzt werden, die jeweils radial nach außen magnetisiert sind und vorzugsweise durch ihre symmetrische Ausbildung Kippmomente des Ankers senkrecht zu der Axialrichtung vermeiden.

Die Magnetventil-Einrichtung weist das bistabile Magnetventil, und weiterhin eine Ansteuerschaltung, z. B. mit einer Endstufe und einer Steuereinrichtung auf.

Für einen Schaltvorgang wird die Elektromagneteinrichtung an der schaltenden Seite, an der der axiale Luftspalt zwischen dem Kern und dem Anker vorgesehen ist, mit einem schaltenden Strom bestromt, um das aufgrund des Luftspalts geringeren Permanentmagnetfeld bzw. den Permanentfluss zu unterstützen.

Die Ausbildung des durch die radial angeordnete Permanentmagneteinrichtung ausgebildeten radialen Permanentmagnetfeldes bzw. Permanentmagnetflusses zwischen den Spulen wirkt insbesondere synergistisch mit einem Schaltvorgang zusammen, bei dem weiterhin auch die Elektromagneteinrichtung an der haltenden Seite bestromt wird, um das haltende Permanentmagnetfeld (bzw. den haltenden Permanentfluss), das aufgrund des fehlenden Luftspaltes stärker als das andere Permanentmagnetfeld (bzw. Permanentfluss) ist, zumindest teilweise zu kompensieren oder zu schwächen. Somit werden vorzugsweise bei jedem Schaltvorgang von einer in die andere Ankerstellung beide Elektromagnet-Einrichtungen, d. h. z. B. eine erste Spule der ersten Elektromagnet-Einrichtung und eine zweite Spule der zweiten Elektromagnet- Einrichtung, bestromt.

Erfindungsgemäß wird erkannt, dass durch diese Bestromung beider Spulen der Schaltvorgang verbessert werden kann. Somit wird für den Schaltvorgang von der ersten Stellung in die zweite Stellung nicht nur die zweite Elektromagnet-Einrichtung zur Verstärkung des schwächeren zweiten Permanentmagnetfeldes bzw. Permanentmagnetflusses bestromt, sondern auch die erste Elektromagneteinrichtung zur zumindest teilweisen Kompensation des ersten Permanentmagnetfeldes. Durch diese zumindest teilweise Kompensation wird somit die magnetische Haltekraft des haltenden Permanentmagnetfeldes bereits verringert, und das schaltende zweite Elektromagnetfeld kann bezüglich seiner magnetischen Feldstärke bzw. der Ausbildung an Amperewindungen kleiner dimensioniert werden, um den Schaltvorgang durch Verstärkung des zweiten Permanentmagnetfeldes zu ermöglichen. Hierbei wird insbesondere auch erkannt, dass die ergänzende Bestromung des kompensierenden Elektromagnetfeldes grundsätzlich keinen zusätzlichen Hardwareaufwand erfordert, da ohnehin eine Schalteinrichtung, z. B. Schalt-Transistoren, zu seiner Beschaltung vorgesehen ist.

Das erste Elektromagnetfeld und erste Permanentmagnetfeld bilden somit ein erstes Gesamt-Magnetfeld, entsprechend bilden das zweite Elektromagnetfeld und zweite Permanentmagnetfeld bilden somit ein zweites Gesamt-Magnetfeld.

Die elektrische Ansteuerung der beiden Elektromagneteinrichtungen kann auf unterschiedliche Weise erfolgen. So können die beiden Elektromagneteinrichtungen, d.h. insbesondere die erste und zweite Spule, zusammen geschaltet werden. Sie können z. B. in Reihe oder parallel geschaltet sein und somit für jeden Schaltvorgang gemeinsam geschaltet werden, wobei die Stromrichtungen für die jeweiligen Schaltvorgänge entsprechend umgepolt werden, so dass jeweils ein Elektromagnetfeld als kompensierend, d.h. zur Kompensation des stärkeren Permanentmagnetfeldes (bzw. bzw. den Permanentflusses) und das andere Magnetfeld schaltend, d.h. für die aktive Schaltung dient.

Alternativ hierzu sind auch separate Ansteuerungen der Elektromagnet- Einrichtungen möglich, wobei z. B. eine Highside-Treiberschaltung separat ausgebildet werden kann, bei gemeinsamer Lowside-Ansteuerung gegenüber Masse.

Erfindungsgemäß wird weiterhin erkannt, dass die ergänzende Ausbildung eines kompensierenden Elektromagnetfeldes je nach Dynamik und Stellung des Ankers auch problematisch sein kann, da anfänglich das schaltende Gesamtmagnetfeld (bzw. Gesamtmagnetfluss) aufgrund des Luftspaltes noch klein ist, hingegen das zur Kompensation dienende "kompensierende" Elektromagnetfeld aufgrund des fehlenden Luftspaltes schnell groß werden kann. So kann z. B. bei zu schneller oder zu starker Bestromung das kompensierende erste Elektromagnetfeld (bzw. Elektromagnetfluss) ggf. so groß werden, das es das erste Permanent-Magnetfeld nicht nur kompensiert, sondern so stark überkompensiert, dass sich ein erstes Gesamt-Magnetfeld ergibt, dass vom Betrag her größer ist als das zum aktiven Schalten vorgesehene zweite Gesamt- Magnetfeld, das durch den Luftspalt geschwächt ist.

Um eine derartige Überkompensation und somit einen fehlenden Schaltvorgang zu vermeiden, sind unterschiedliche Maßnahmen möglich. So kann, insbesondere bei gemeinsamer Ansteuerung beider Spulen z. B. eine zeitlich verzögerte oder zeitlich variable Ansteuerung erfolgen, bei der der Strom nicht sofort auf seinen Maximalwert gefahren wird, sondern mit zeitlicher Verzögerung hochgefahren wird, z. B. mit stetigem Anstieg und/oder mit sprunghaftem Anstieg über mindestens einen mittleren Wert. So kann z. B. eine zeitliche Einschaltrampe hochgefahren werden und/oder eine diskrete Erhöhung über mittlere Werte erfolgen, die eine mechanische Verstellung des Ankers ermöglichen, d. h. z. B. im Zeitraum oberhalb von 10 ms, z. B. im Zeitraum von 100 ms. Somit kompensiert das ergänzende Elektromagnetfeld in der Einschaltrampe zunächst das Luftspalt-lose haltende Permanentmagnetfeld, während auf der anderen Seite das schaltende Elektromagnetfeld das Permanentmagnetfeld verstärkt, so dass in der Einschaltdauer eine Elektromagnet-Ausbildung erreicht wird, die den Anker in gewünschter Weise in die andere Schaltstellung zieht, bevor das erste Permanentmagnetfeld überkompensiert wird.

Ergänzend oder alternativ zu einer zeitlich variablen Ansteuerung kann bei separater Ansteuerung der Elektromagnet-Einrichtungen auch das kompensierende Elektromagnetfeld mit geringerer Stromstärke angesteuert werden. Dies kann insbesondere durch getaktetes Ansteuern, z. B. PWM, erfolgen, so dass das kompensierende Elektromagnetfeld mit geringerer Stromstärke bzw. bei PWM-Taktung geringerer PWM-Rate angesteuert wird als das schaltende Elektromagnetfeld.

Die Erfindung wird im Folgenden anhand der beiliegenden Zeichnungen an einigen Ausführungsformen näher erläutert. Es zeigen:
- Fig. 1: ein bistabiles Magnetventil gemäß einer Ausführungsform in geschnittener Darstellung;
- Fig. 2: ein Magnetventil gemäß einer weiteren Ausführungsform mit ergänzendem Polrohr;
- Fig. 3: eine Darstellung des Verlaufs der Magnetfeldlinien;
- Fig. 4a) und b): alternative Ausbildungen der Permanentmagnet- Einrichtung;
- Fig. 5: eine Schaltungsanordnung zur Ansteuerung der Spulen gemäß einer ersten Ausführungsform mit fester Reihenschaltung beider Spulen;
- Fig. 6: eine Schaltungsanordnung gemäß einer weiteren Ausführungsform mit getrennter Ansteuerung der Spulen;
- Fig. 7: eine schaltungstechnische Realisierung einer getrennten Spulenansteuerung gemäß einer Ausführungsform;
- Fig. 8: Zeitdiagramme des Spulenstroms gemäß Ausführungsformen mit zeitlich variabler oder Rampen-Ansteuerung;

- Fig. 9: ein Schnittbild des bistabilen Magnetventils gemäß einer Ausführungsform in der ersten Ankerstellung; und
- Fig. 10: ein Schnittbild des bistabilen Magnetventils aus Fig. 9 in der zweiten Ankerstellung.

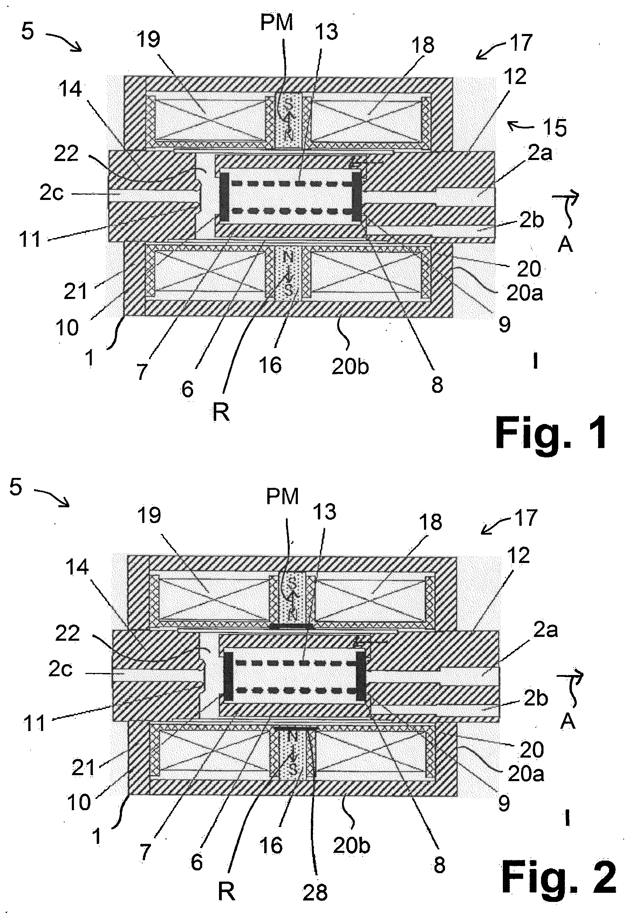

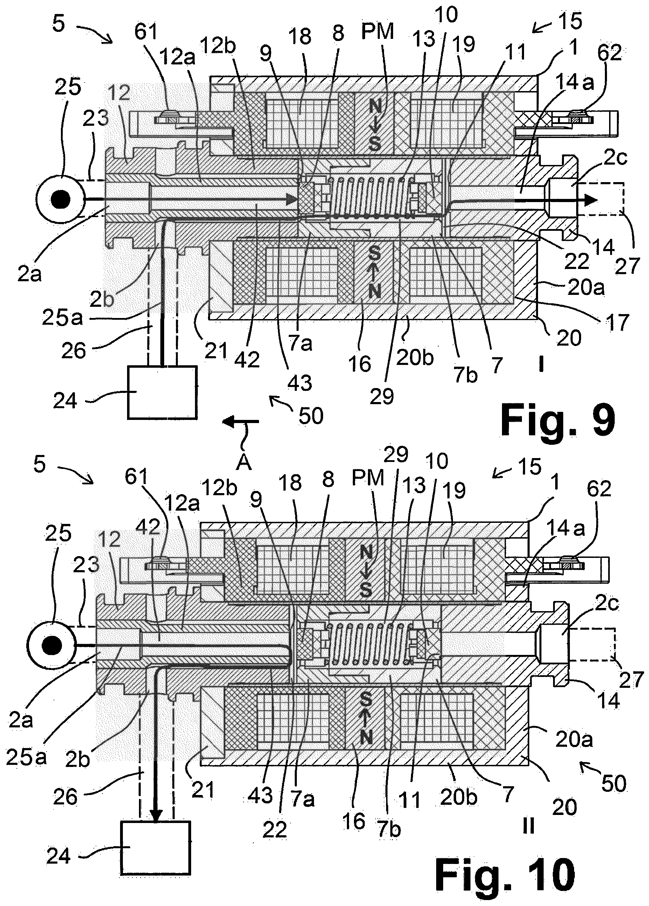

Ein bistabiles Magnetventil 1 ist zum Einsatz in einem Fluidsystem 50, insbesondere in einem Druckluftsystem ausgebildet, insbesondere als 3/2- Magnetventil mit drei Anschlüssen, vorzugsweise einem Druckeingang 2a, einem ersten Druckausgang 2b und einem zweiten Druckausgang 2c, der z. B. als Entlüftung dienen kann. Somit kann das bistabile Magnetventil 1 in einem Pneumatik-System bzw. Druckluftsystem, z. B. dem Druckluftsystem eines Nutzfahrzeuges, dazu dienen, wahlweise gemäß der ersten Ankerstellung I der Fig. 1 den ersten Druckausgang 2b an den zweiten Druckausgang 2c und somit an die Entlüftung anzuschließen, oder den Druckeingang 2a an den ersten Druckausgang 2b anzuschließen, wie weiter unten mit Bezug zu Fig. 9 und 10 erläutert wird.

Hierzu weist das bistabile Magnetventil 1 ein Ankerführungsrohr 6 und einen in dem Ankerführungsrohr 6 in Axialrichtung A längsverstellbar geführten Anker 7 auf. An dem Anker 7 ist eine erste Ventildichtung 8 ausgebildet, die an einem ersten Ventilsitz 9, z. B. zum Verschluss des Druckeingangs 2a, zur Anlage kommt, sowie weiterhin eine zweite Ventildichtung 10, die zur Anlage an einem zweiten Ventilsitz 11, z. B. zum Verschluss des zweiten Druckausgangs 2c, kommt.

Die Ventildichtungen 8 und 10 sind vorteilhafterweise durch eine Ankerfeder 13 federvorgespannt, zur dichtenden Anlage an ihrem jeweiligen Ventilsitz 9 bzw. 11.

Der Anker 7 ist magnetisch leitend, d. h. aus ferromagnetischem Material ausgebildet; in Axialrichtung A schließt sich zu einer ersten Seite ein erster Kern 12, in dem gemäß dieser Ausbildung der Druckeingang 2a und der erste Druckausgang 2b ausgebildet sind, sowie zu der anderen, zweiten Seite ein zweiter Kern 14 an, in dem der zweite Druckausgang 2c für die Entlüftung ausgebildet ist.

Radial außerhalb des Ankerführungsrohrs 6 ist eine Magnet-Einrichtung 15 angeordnet, die eine Permanentmagnet-Einrichtung 16 und eine Elektromagnet-Einrichtung 17 aufweist, wobei die Elektromagnet-Einrichtung 17 wiederum mit einer ersten Spule 18 und einer zweiten Spule 19 ausgebildet ist. Die gesamte Magnet-Einrichtung 15 ist in einem magnetischen Joch 20, 21 aufgenommen, das durch einen Jochtopf 20 mit Topfboden 20a und zylinderförmiger Topfwand 20b und eine den Jochtopf 20 zu einer axialen Seite hin verschließenden Jochscheibe 21 ausgebildet ist.

Die beiden Kerne 12 und 14 liegen vorteilhafterweise in radialer Richtung R direkt an der Jochscheibe 21 und dem Jochtopf 20 an, d.h. ohne radialen Luftspalt. Weiterhin liegt der Anker 7 in seinen beiden Ankerstellungen bzw. Stellungen direkt in axialer Richtung A bzw. -A an einem der beiden Kerne 12, 14 an und weist zu dem jeweils anderen Kern 14, 12 einen Luftspalt 22 auf. Somit liegt in der in Fig. 1 und 2 gezeigten ersten Stellung I der Anker 7 in axialer Richtung A direkt, d. h. ohne Luftspalt, an dem ersten Kern 12 an, wobei ein axialer Luftspalt 22 zwischen dem Anker 7 und dem zweiten Kern 14 ausgebildet ist; entsprechend liegt der Anker 7 in der hier nicht gezeigten zweiten Stellung II direkt an dem zweiten Kern 14 an, d. h. ebenfalls ohne Luftspalt an, wobei dann ein Luftspalt zwischen dem Anker 7 und dem ersten Kern 12 ausgebildet ist.

Die Permanentmagnet-Einrichtung 16 ist vorteilhafterweise axial zwischen der ersten Spule 18 und der zweiten Spule 19 angeordnet und radial magnetisiert, d. h. die Magnetisierung und somit die magnetischen Flusslinien des Permanentmagnetfeldes PM verlaufen in radialer Richtung R, z. B. radial nach außen, d. h. senkrecht zur Achse A. In den Figuren ist zum Teil vereinfacht das Magnetfeld durch Linien dargestellt; grundsätzlich ist der durch das Magnetfeld ausgebildete Magnetfluss für die magnetischen Wirkungen relevant.

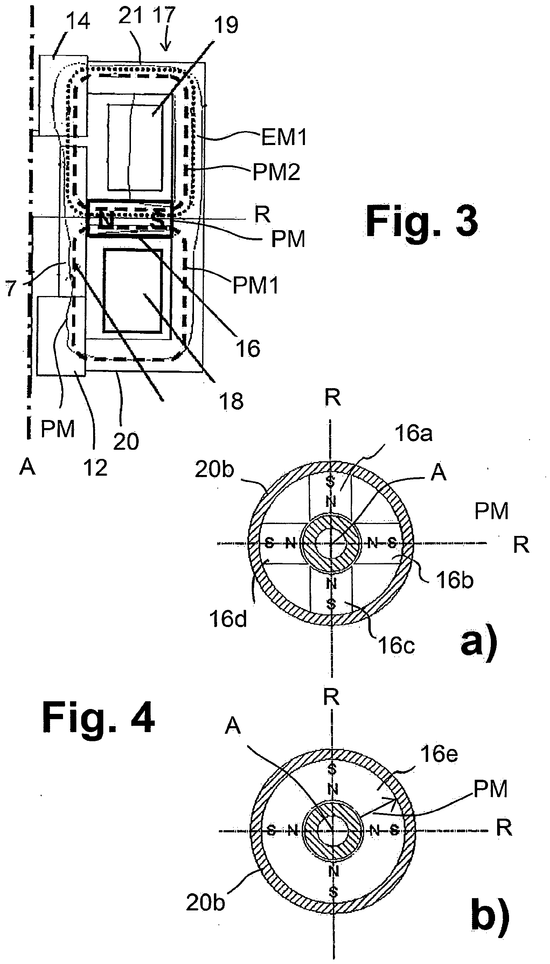

Hierbei sind gemäß Fig. 4a), b) unterschiedliche Ausbildungen der Permanentmagnet-Einrichtung 16 möglich.

Gemäß Fig. 4a) sind z. B. vier einzelne Permanentmagnete 16a, 16b, 16c und 16d vorgesehen, die jeweils länglich ausgebildet sind und sich jeweils in einer radialen Richtung, d. h. senkrecht zur Achse A, erstrecken, mit jeweils gleicher Polarität, z. B. einem zu dem Ankerführungsrohr 6 hin weisenden Nordpol N und einem zu der radial äußeren Topfwand 20b des Jochtopfes 20 hin weisenden Südpol S, oder umgekehrt.

Gemäß der Ausführungsform der Fig. 4b ist eine Permanentmagnet-Scheibe 16e vorgesehen, die als Ring bzw. Scheibe ausgeführt und hierbei in radialer Richtung magnetisiert ausgebildet ist.

Grundsätzlich kann die Permanentmagnet-Einrichtung 16 z. B. auch weniger, z. B. lediglich zwei Permanentmagnete 16a, 16c entsprechend Fig. 4a), oder auch eine andere Anzahl einzelner Permanentmagnete aufweisen, die vorteilhafterweise derartig symmetrisch angeordnet sind, dass Querkräfte und Kippmomente senkrecht zur Achse A vermieden werden.

Da die Permanentmagnet-Einrichtung 16 außerhalb des Ankerführungsrohrs 6 ausgebildet ist, kann sie auch mit breiterer axialer Erstreckung ausgebildet werden, so dass herkömmliche Materialien für Permanentmagnete, z. B. eine Eisenlegierung oder ein keramisches Material, eingesetzt werden; der Einsatz z. B. seltener Erden ist grundsätzlich nicht erforderlich.

Das gemeinsame Permanentmagnetfeld PM verläuft somit in radialer Richtung R durch die Permanentmagnet-Einrichtung 16 und nachfolgend durch das Joch 20, 21, wobei es axial in beide Richtungen, d.h. -A und A verläuft, d.h. entlang der Topfwand 20b als erstes Permanentmagnetfeld PM1 und zweites Permanentmagnetfeld PM2, wobei die Permanentmagnetfelder PM1, PM2 dann an den axialen Enden radial nach unten entlang des Topfbodens 20b sowie der Jochscheibe 21 zu den Kernen 12, 14 verlaufen, und nachfolgend axial, d.h. in Richtung A oder -A, zu dem Anker 7 und wieder zu der Permanentmagnet-Einrichtung 16.

Die beiden Permanentmagnetfelder PM1, PM2 können somit jeweils z. B. etwa die Form eines Torus aufweisen; das gesamte Permanentmagnetfeld PM ist somit z. B. als Doppel-Torus bzw. hantelförmig ausgebildet.

In der ersten Ankerstellung I bzw. Entlüftungsstellung der Fig. 1 liegt der magnetisch leitende Anker 7 an dem ersten Kern 12, so dass hier das erste Permanentmagnetfeld PM1 direkt vom ersten Kern 12 durch den Anker 7, und in dem Anker 7 axialer Richtung wiederum zu der Permanentmagnet-Einrichtung 16 verläuft. Ein Luftspalt ist allenfalls als radialer Luftspalt zwischen dem Anker 7 und der Permanentmagnet-Einrichtung 16 ausgebildet, jedoch nicht als Axialspalt, so dass das erste Permanentmagnetfeld PM1 eine starke magnetische Haltekraft des Ankers 7 am ersten Kern 12 ausbildet. Das durch den zweiten Kern 14 verlaufende zweite Permanentmagnetfeld PM2 verläuft hingegen durch den Luftspalt 22 zu dem Anker 7 und wird durch den Luftspalt 22 deutlich geschwächt. Somit ist die magnetische Haltekraft des ersten Permanentmagnetfeldes PM1 deutlich größer als die anziehende Kraft des zweiten Permanentmagnetfeldes PM2; der Anker 7 wird in der rechten Position, d. h. der Ankerstellung I der Fig. 1, sicher gehalten.

Da das bistabile Magnetventil 1 grundsätzlich in Axialrichtung A symmetrisch bezüglich der Ausbildung der beiden Kerne 12 und 14 und der Spulen 18 und 19 ist, wird auch die in Fig. 1 nicht gezeigte zweite Ankerstellung II sicher gehalten, da hier ein Luftspalt entsprechend zwischen dem Anker 7 und dem ersten Kern 12 ausgebildet wird, der das erste Permanentmagnetfeld PM1 schwächt, hingegen liegt ein starkes zweites Permanentmagnetfeld PM2 vor.

Die erste Spule 18 erzeugt ein erstes Elektromagnetfeld EM1; entsprechend erzeugt die zweite Spule 19 ein zweites Elektromagnetfeld EM2, wobei die Elektromagnetfelder EM1 und EM2 mit den Permanentmagnetfeldern PM1, PM2 und miteinander überlagern.

Das erste Elektromagnetfeld EM1 der ersten Spule 18 ist ebenfalls Torusförmig ausgebildet und verläuft im Wesentlichen entsprechen dem ersten Permanentmagnetfeld PM1, insbesondere bei rotationssymmetrischer Ausbildung des Permanentmagnetfeldes PM1 nach Fig. 4b):
das erste Elektromagnetfeld EM1 verläuft zunächst innerhalb der ersten Spule 18, d. h. in Axialrichtung A - je nach Bestromung - von dem ersten Kern 12 in axialer Richtung nach innen oder außen, d. h. z. B. von außen (in Fig. 1 rechts) nach innen zu dem Anker 7, und von dem Anker 7 radial nach außen, d. h. entlang der Permanentmagnet-Einrichtung 16 nach außen, und von dort entlang der Topfwand 20b und dem Topfboden 20a radial nach innen zurück zum ersten Kern 12. Entsprechend verläuft bei Bestromung der zweiten Spule 19 das zweite Elektromagnetfeld EM2 ähnlich dem zweiten Permanentmagnetfeldes PM2, d.h. - je nach Polung - von dem zweiten Kern 14 in axialer Richtung A zu dem Anker 7 hin, oder in Gegenrichtung von dem Anker 7 zu dem zweiten Kern 14 hin, und jeweils in radialer Richtung radial nach außen entlang der Permanentmagnet-Einrichtung 16, der Topfwand 20b in axialer Richtung, und entlang der Jochscheibe 21 radial nach innen.

In Fig. 1 wird somit das zweite Elektromagnetfeld EM2 wiederum durch den Luftspalt 22 geschwächt, das erste Elektromagnetfeld EM1 hingegen nicht.

Die Schaltvorgänge SV1 und SV2 des bistabilen Magnetventils 1 zwischen der ersten Ankerstellung I und der zweiten Ankerstellung II erfolgen vorteilhafterweise durch Bestromung jeweils beider Spulen 18 und 19. Für den zweiten Schaltvorgang SV2 von der ersten Ankerstellung I der Fig. 1 ausgehend wird ein erstes Elektromagnetfeld EM1 der ersten Spule 18 aufgebaut, das dem ersten Permanentmagnetfeld PM1 entgegengesetzt ist und dieses insbesondere teilweise kompensiert, so dass die magnetische Haltekraft des Ankers 6 am ersten Kern 12 bereits zumindest verringert wird. Weiterhin wird die zweite Spule 19 derartig bestromt, dass das zweite Permanentmagnetfeld PM2 durch das zweite Elektromagnetfeld EM2 verstärkt wird, d. h. beide Felder PM2 und EM2 weisen in dieselbe Richtung, so dass trotz des Luftspaltes 22 die auf den Anker 7 wirkende, in Fig. 1 nach links zeigende magnetische Kraft größer wird und den Anker 7 in Fig. 1 nach links verstellt, wodurch der Luftspalt 22 verringert wird und ganz verschwindet, und ein Luftspalt zwischen dem Anker 7 und dem ersten Kern 12 entsteht.

Somit wirkt jeweils eines der elektromagnetischen Felder EM1 und EM2 kompensierend und das andere schaltend. Für den zweiten Schaltvorgang SV2 von der ersten Ankerstellung I bzw. Entlüftungsstellung der Fig. 1 ausgehend wirkt somit ein durch die erste Spule 18 geleiteter erster Strom I1 kompensierend, d.h. als kompensierender erster Strom I1_k, und ein durch die zweite Spule 19 geleiteter zweiter Strom I2 schaltend, d.h. als schaltender zweiter Strom I2_s. Für den ersten Schaltvorgang SV1 zurück in die erste Ankerstellung I wird entsprechend durch die zweite Spule 19 ein kompensierender zweiter Strom I2_k und durch die erste Spule 18 ein schaltender erster Strom I1_s geleitet.

Die beiden Spulen 18 und 19 sind über Spulenanschlüsse 61a,b und 62a, b an jeweilige Schaltungsanordnungen 30, 31, 35 angeschlossen.

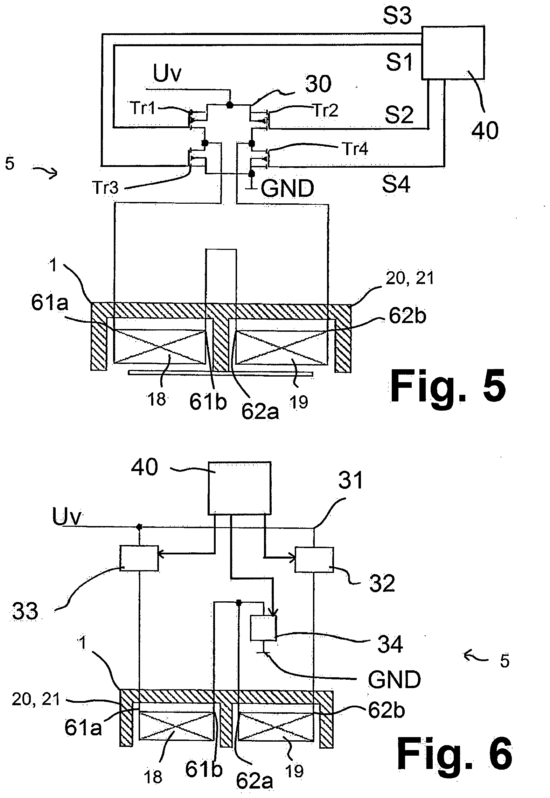

Die beiden Spulen 18 und 19 können gemäß einer in Fig. 5 und 6 gezeigten Ausbildung von einer Steuereinrichtung 40 gesteuert über eine Schaltungsanordnung 30 oder 31, die insbesondere eine Endstufe darstellt, zusammen bestromt werden. Somit wird eine Magnetventil-Einrichtung 5 gebildet, die das bistabile Magnetventil 1, die Schaltungsanordnung 30 oder 31 und die Steuereinrichtung 40 aufweist.

Vorteilhafterweise wird hierbei erkannt, dass ein sofortiges und vollständiges Hochfahren des jeweils kompensierenden Stroms, in Fig. 1 somit des ersten Stroms I1_k, dazu führen kann, dass das kompensierende, z. B. erste Elektromagnetfeld EM1 zu stark wird und die Differenz EM1 - PM1 vom Betrag her größer werden kann als das sich positiv überlagernde, jedoch durch den Luftspalt 22 geschwächte, schaltende zweite Gesamtfeld EM2 + PM2.

Daher wird gemäß einer ersten Ausführungsform zumindest der jeweils kompensierend wirkende Strom I1_k oder I2_k zeitlich variabel, z. B. verzögert hochgefahren, vorteilhafterweise über eine Rampe und/oder mit diskreter Steigerung. Bei einer Reihenschaltung der beiden Ströme I1, I2 können somit beide Ströme zeitlich verzögert hochgefahren werden.

Fig. 5 und 6 zeigen Ausbildungen einer Schaltungsanordnung 30 bzw. 31 für derartige Rampensteuerungen.

Die Spulen 18 und 19 können gemäß Fig. 5 in einer Reihenschaltung geschaltet sein. Somit weist die Schaltungsanordnung 30 gemäß Fig. 5 vier Transistoren, vorzugsweise Schaltungs-MOSFETS Tr1, Tr2, Tr3 und Tr4 auf, die als Endstufen-H-Brücke geschaltet sind, so dass gemäß Fig. 5 über Steuersignale S1, S2, S3, S4 eine Bestromung entweder mit Tr1 = ON, Tr4 = ON und Tr2 = OFF, Tr3 = OFF vorliegt, um die Versorgungsspannung Uv von z. B. 24 V oder 12 V über Tr1, die Reihenschaltung der Spulen 19 und 18, sowie Tr4 auf Masse GND zu führen, oder entsprechend symmetrisch umgekehrt mit Tr1 = OFF, Tr4 = OFF, Tr2 = ON und Tr3 = ON, um die Versorgungsspannung Uv über Tr2 und die Reihenschaltung der Spulen 18 und 19 sowie Tr3 zur Masse GND zu führen.

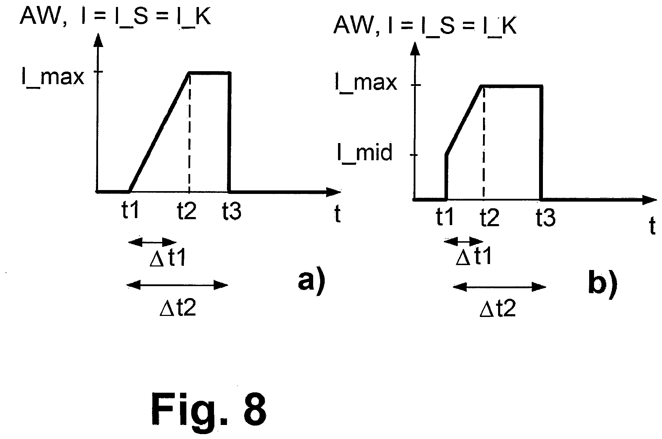

Die H-Brücke der Fig. 5 ist hierbei insbesondere auch zur Ausbildung einer zeitlichen Rampe gemäß Fig. 8 geeignet, bei der der gemeinsame Spulenstrom I, d.h. I1= I2=I und somit auch I = I_k (kompensierender Strom) = I_s (schaltender Strom) gemäß Fig. 8a) zum Zeitpunkt t1 eingeschaltet und auf einen maximalen Stromwert I_max hochgefahren wird, den er zu einem Zeitpunkt t2 erreicht. Zu einem nachfolgenden Zeitpunkt t3 kann der gemeinsame Strom I nachfolgend sofort abgeschaltet werden. Ergänzend sind die Amperewindungen AW eingezeichnet, die sich als Produkt des Stroms und der Wicklungszahl ergeben, Die Anfahr-Schaltdauer Δt1 zwischen t2 und t1 beträgt z. B. Δt2=50 bis 70 ms, die Gesamt-Schaltdauer Δt2 zwischen t3 und t1 beträgt z. B. Δt2 =100 ms. Das rein mechanische Schalten des Ventils erfolgt je nach Toleranzlage der einzelnen Bauteile im Ventil zwischen den Zeitpunkten t1 und t2.

Fig. 8b zeigt eine alternative Ansteuerung, bei der zum Zeitpunkt t1 der Strom sofort auf einen mittleren Stromwert I_mid, und nachfolgend mit linearer Rampe bis zum Zeitpunkt t2 auf den Maximalwert I_max gefahren wird, bis er zum Zeitpunkt t3 wieder ausgeschaltet wird. Die Schaltdauern Δt1 und Δt2 können ähnliche Werte wie in Fig. 8a annehmen.

Somit wird zwischen t1 und t2 zunächst ein in der ersten Stellung I der Fig. 1 schwaches erstes Elektromagnetfeld EM1 ausgebildet, das das haltende Permanentmagnetfeld, hier somit das erste Permanentmagnetfeld PM1 ganz oder teilweise kompensiert, jedoch erst zum Zeitpunkt t1 den maximalen Stromwert I_max erreicht. Die Anfahr-Schaltdauer Δt1 ist hinreichend, um eine mechanische Verstellung des Ankers 7 weg von der ersten Ankerstellung I zu erreichen; sobald sich ein Luftspalt zwischen dem Anker 7 und dem ersten Kern 12 bildet, ist die Gefahr eines unbeabsichtigten Haltens in der ersten Ankerstellung I bereits deutlich verringert.

In Fig. 5 können die Spulen 18 und 19 auch parallel geschaltet sein. Fig. 6 zeigt eine Schaltungsausbildung 31 mit Parallelschaltung der Spulen 18 und 19, die eine erste Highside-Treiberschaltung 32 an die erste Spule 18 und entsprechend eine zweite Highside-Treiberschaltung 33 an die Spule 19 angeschlossen, wobei beide Spulen 18 und 19 über eine gemeinsame Lowside-Treiberschaltung 34 an Masse GND angeschlossen sind. Somit wird auch hier eine Rampensteuerung ermöglicht.

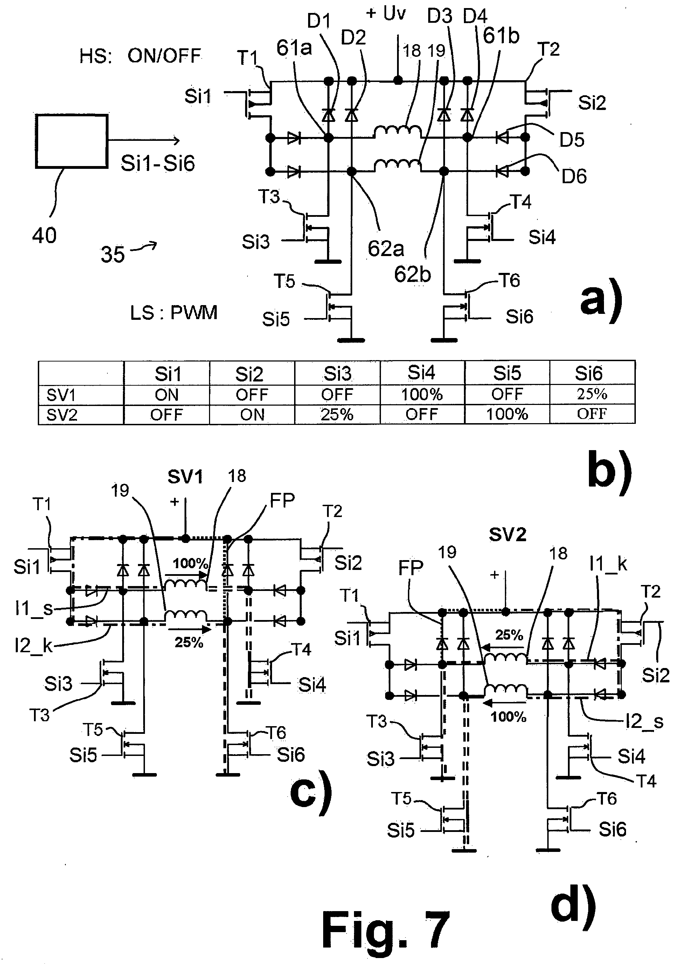

Fig. 7 zeigt eine Schaltungsanordnung 35, die ohne zeitliche Rampe realisierbar ist, mit Ansteuerung der Transistoren, insbesondere MOSFETs T1, T2, T3, T4, T5, T6, die als Hiside-Transistoren T1 und T2 und Loside- Transistoren T3 bis T6 vorgesehen sind, über Hiside-Steuersignale Si1 und Si 2 sowie Loside- Steuersignale Si3, Si4, Si5, Si6.

Für beide Schaltvorgänge SV1, SV2 wird jeweils das kompensierende, schwächere Elektromagnetfeld, d. h. in Fig. 1 bzw. Fig. 3 das erste Elektromagnetfeld EM1, entsprechend nur teilweise angesteuert. Dies kann vorteilhafterweise über PWM erfolgen, wobei die Ansteuerung durch Schaltzustände ON, OFF sowie zum Ausbilden eines Leistungsstroms zwischen dem Minimal- und Maximalwert die Ansteuerung über PWM, d. h. zeitweiser Ansteuerung, erfolgt.

Fig. 7a) zeigt hierbei die Schaltung, Fig. 7b) ergänzend die nachfolgende Tabelle der Ansteuerphasen

| SchaltVorgang | Si1 | Si2 | Si3 | Si4 | Si5 | Si6 |
|---|---|---|---|---|---|---|
| SV1 (II→I) | ON | OFF | OFF | 100% | OFF | 25% |
| SV2 (I→II) | OFF | ON | 25% | OFF | 100% | OFF |

Hierbei beziehen sich die Prozent-Angaben auf die PWM-Ansteuerung, d.h. den Anteil an "ON" bzw. Transistor-Aussteuerung; der Wert 25% steht somit insbesondere für eine PWM-Ansteuerung, bei der 25% der Taktperiode "ON" vorliegt. SV1 ist der erste Schaltvorgang zum Einstellen der ersten Ankerstellung I, SV2 entsprechend der zweite Schaltvorgang zum Einstellen der zweiten Ankerstellung II.

Fig. 7c) und Fig. 7d) zeigen grafisch veranschaulicht die Strompfade in den beiden Schaltvorgängen SV1 und SV2, mit den schaltenden Strömen I1_s und I2_s und kompensierenden Strömen I1_k und I2_k, wobei sich ergänzend noch z. B. Freilaufströme FP ausbilden.

Die Dioden D1, D2, D3, D4, D5, D6 dienen in der Schaltungsanordnung 35 der Fig. 7 der Vermeidung von Sperrströmen und der Ermöglichung von Freilaufströmen der Spulen 18 und 19.

Fig. 2 zeigt eine Weiterentwicklung der Fig. 1, bei der ergänzend ein Polrohr 28 radial zwischen der Permanentmagnet-Einrichtung 16 und dem Anker 7, bzw. dem Ankerführungsrohr 6 vorgesehen ist, um einen besseren Übergang der Feldlinien bzw. des Permanentmagnetfeldes in den Anker 7 zu ermöglichen.

Fig. 9 und Fig. 10 zeigen eine detaillierte Ausbildung eines Magnetventils 1 entsprechend Fig. 1 oder 2. Die Permanent-Magneteinrichtung 16 ist hier zur Veranschaulichung in gegenüber Fig. 1 und 2 umgekehrter Polung eingesetzt. Druckluft 25a wird von einer Druckluftversorgung 25, z. B. einem Druckluftspeicher, über eine Druckluft-Zuleitung 23 dem Druckeingang 2a zugeführt, und über den ersten Druckausgang 2b und eine Druck- Ausgangsleitung 26 zu einem Verbraucher 24 geführt. An den zweiten Druckausgang 2c, der als Entlüftung dient, ist ein Druckauslass 27 direkt oder über indirekt eine Leitung angebracht.

In der ersten Ankerstellung I, d.h. der Entlüftungsstellung der Fig. 9, wird die an dem Druckeingang 2a und der inneren Bohrung 42 des ersten Kerns 12 anliegende Druckluft an dem geschlossenen ersten Ventil, d.h. zwischen dem ersten Ventilsitz 9 und der ersten Ventildichtung 8, blockiert. Druckluft 25a kann von dem Verbraucher 24 über die Druck-Ausgangsleitung 26, den ersten Druckausgang 2b, dann über eine äußere axiale Bohrung 43 des Kerns 12, einen Innenraum 29 des Ankers 7, in dem vorzugsweise auch z. B. die innere Ankerfeder 13 vorgesehen ist, und über den Axialspalt 22 des offenen zweiten Ventils 10,11 sowie die Bohrung 14a des zweiten Kerns 14 zum zweiten Druckausgang 2c und somit zu dem Druckauslass 27 zur Entlüftung geführt werden. Das zweite Ventil 10, 11 ist somit offen, da der zweite Ventilsitz 11 von der zweiten Ventildichtung 10 durch den Axialspalt 22 getrennt ist.

In der zweiten Ankerstellung II, d.h. der Belüftungsstellung der Fig. 10, ist das erste Ventil 8, 9 offen, d.h. der Axialspalt 22 ist zwischen dem ersten Ventilsitz 9 und der ersten Ventildichtung 8 ausgebildet. Entsprechend ist das zweite Ventil 10, 11 geschlossenen, indem der zweite Ventilsitz 11 auf der zweiten Ventildichtung 10 aufliegt. Druckluft 25a wird somit von der Druckluftversorgung 25 über die Druckluft-Zuleitung 23, den Druckeingang 2a, die innere Bohrung 42, das offene erste Ventil 8, 9, den Axialspalt 22, die radial äußere Bohrung 43 zu dem ersten Druckausgang 2b und somit zu dem Verbraucher 24 geführt.

Die Bohrungen 42, 43 im ersten Kern 12 sind vorteilhafterweise ausgebildet, indem der erste Kern 12 mit einem inneren Rohr 12a und einem äußeren Rohr 12b ausgebildet ist, zwischen denen zumindest in einigen Bereichen des Umfangs die äußere axiale Bohrung 43 ausgebildet ist; die innere Bohrung 42 wird durch die zentrale Bohrung des inneren Rohrs 12a gebildet.

Der Anker 7 wird gemäß der hier gezeigten Ausbildung durch einen ersten Ankerteil 7a und einen zweiten Ankerteil 7b gebildet, die z. B. durch Presspassung zusammen gefügt werden; die Ankerfeder 13 drückt die Ventildichtungen 8 und 10 axial auseinander. Der Anker 7 kann somit mit einem Anker-Innenraum 29 gefügt werden, der wie oben beschrieben als Luftkanal für die Entlüftung dient.

### Bezugszeichenliste (Bestandteil der Beschreibung)

- 1: bistabiles Magnetventil
- 2a: Druckeingang
- 2b: erster Druckausgang zu Druckanschlussleitung/-ausgangsleitung
- 2c: zweiter Druckausgang zu Entlüftung
- 3, 4: Druckluft-Zuführleitung und Druckluft-Ausgangsleitung
- 5: bistabile Magnetventil-Einrichtung
- 6: Ankerführungsrohr
- 7: Anker
- 7a: erstes Ankerteil
- 7b: zweites Ankerteil
- 8: erste Ventildichtung an Anker 7
- 9: erster Ventilsitz
- 10: zweite Ventildichtung an Anker 7
- 11: zweiter Ventilsitz
- 12: erster Kern
- 12a: inneres Rohr des ersten Kerns 12
- 12b: äußeres Rohr des ersten Kerns 12
- 13: innere Ankerfeder in Anker 7 zwischen den Ventildichtungen 8 und 10
- 14: zweiter Kern
- 15: Magnet-Einrichtung
- 16: Permanentmagnet-Einrichtung
- 16a, b, c, d: stabförmige Permanentmagnete
- 16e: Permanentmagnet-Ring
- 17: Elektromagneteinrichtung
- 18: erste Spule
- 19: zweite Spule
- 20: Jochtopf
- 20a: Topfboden
- 20b: Topfwand
- 21: Jochscheibe
- 22: Luftspalt
- 23: Druckluft-Zuleitung
- 24: Verbraucher
- 25: Druckluftversorgung
- 25a: Druckluft
- 26: Druck-Ausgangsleitung
- 27: Druckauslass
- 28: Polrohr für radialen Feldlinien-Übergang
- 29: Anker-Innenraum
- 30: Schaltungsanordnung der Fig. 5 für Rampensteuerung
- 31: Schaltungsanordnung der Fig. 6 für Rampensteuerung
- 32: erste Highside-Treiberschaltung der Fig. 6
- 33: zweite Highside-Treiberschaltung der Fig. 6
- 34: Lowside-Treiberschaltung der Fig. 6
- 35: Schaltungsanordnung der Fig. 7 für separate Spulenansteuerung
- 40: Steuereinrichtung
- 42: zentrale Bohrung im ersten Kern 12
- 43: äußere Bohrung im ersten Kern 12, zwischen den Rohren 12a, 12b
- 50: Fluidsystem

- 61a,b: Spulenanschlüsse der ersten Spule 18 an die Schaltungsanordnung
- 62a, b: Spulenanschlüsse der zweiten Spule 19 an die Schaltungsanordnung

- Tr1, Tr2, Tr3, Tr4: Transistoren der Schaltungsanordnung 30
- T1, T2, T3, T4, T5, T6: Transistoren der Schaltungsanordnung 35
- Uv: Versorgungsspannung
- GND: Masse
- D1 bis D6: Dioden
- A: Achse, Axialrichtung
- R: Radialrichtung

- PM: Gesamt-Magnetfeld
- PM1: erstes Permanentmagnetfeld
- PM2: zweites Permanentmagnetfeld
- EM1: erstes Elektromagnetfeld
- EM2: zweites Elektromagnetfeld

- N, S: Nordpol, Südpol
- I: Strom bei Reihenschaltung
- I_s: schaltender Strom
- I_k: kompensierender Strom

- I1: erster Strom durch die erste Spule 18
- I1_s: schaltender erster Strom
- I1_k: kompensierender erster Strom

- I2: zweiter Strom durch die zweite Spule 19
- I2_s: schaltender zweiter Strom
- I2_k: kompensierender zweiter Strom

- S1: erstes Ansteuersignal der Rampensteuerung
- S2: zweites Ansteuersignal der Rampensteuerung
- S3: drittes Ansteuersignal der Rampensteuerung
- S4: viertes Ansteuersignal der Rampensteuerung

- Si1: erstes Hiside-Steuersignal
- Si2: zweites Hiside-Steuersignal
- Si3: drittes Loside-Steuersignal
- Si4: viertes Loside-Steuersignal

- Si5: fünftes Loside-Steuersignal
- Si6: sechstes Loside-Steuersignal

- SV1: Rückstell- Schaltvorgang, erster Schaltvorgang
- SV2: Anker- Schaltvorgang, zweiter Schaltvorgang

## Patentansprüche

1. Bistabiles Magnetventil (1) für ein Fluidsystem (50), wobei das bistabile Magnetventil (1) aufweist:
einen Anker (7), der in einer Axialrichtung (A) zwischen einer ersten Ankerstellung (I) und einer zweiten Ankerstellung (II) verstellbar ist,
einen ersten Kern (12) zur Anlage des Ankers (7) in der ersten Ankerstellung (I) und einem zweiten Kern (14) zur Anlage des Ankers (7) in der zweiten Ankerstellung (II),
wobei der Anker (7) zur Anlage an jeweils einem der Kerne (12, 14) unter Ausbildung eines Luftspaltes (22) zu dem anderen Kern (14, 12) ausgebildet ist,
eine in der ersten Ankerstellung (I) geschlossene erste Ventileinrichtung (8, 9) und eine in der zweiten Ankerstellung (II) geschlossene zweite Ventileinrichtung (10, 11),
eine Permanentmagneteinrichtung (16) zur Ausbildung eines erstes Permanentmagnetfeld (PM1), das über ein magnetisches Joch (20, 21), den ersten Kern (12) und den Anker (7) verläuft, und eines zweiten Permanentmagnetfeldes (PM2), das über das magnetische Joch (20, 21), den zweiten Kern (14) und den Anker (7) verläuft,
eine erste Elektromagneteinrichtung (18) zur Ausbildung eines ersten Elektromagnetfeldes (EM1), das über das magnetische Joch (20), den ersten Kern (12) und den Anker (7) verläuft,
eine zweite Elektromagneteinrichtung (19) zur Ausbildung eines zweiten Elektromagnetfeldes (EM2), das über das magnetische Joch (20, 21), den zweiten Kern (14) und den Anker (7) verläuft,
**dadurch gekennzeichnet, dass**
die Permanentmagneteinrichtung (16) in radialer Richtung relativ zu der Axialrichtung (A) magnetisiert ist.

2. Magnetventil (1) nach Anspruch 1, **dadurch gekennzeichnet, dass** die Permanentmagneteinrichtung (16) radial außerhalb des Ankers (7) und zwischen der ersten Spule (18) und der zweiten Spule (19) positioniert ist

3. Magnetventil (1) nach Anspruch 1 oder 2, **dadurch gekennzeichnet, dass** das Magnetventil (1) als 3/2-Wegeventil mit einem Druckeingang (2a), einem ersten Druckausgang (2b) und einem zweiten Druckausgang (2c) als Anschlüsse des Magnetventils ausgebildet ist, wobei der erste Druckausgang (2b) in den beiden Ankerstellungen (I, II) jeweils mit entweder dem Druckeingang (2a) oder dem zweiten Druckausgang (2c) verbunden ist und der jeweils andere Anschluss (2c, 2a) gesperrt ist.

4. Magnetventil (1) nach einem der vorherigen Ansprüche, **dadurch gekennzeichnet, dass** die Permanentmagneteinrichtung (16) mehrere einzelne Permanentmagnete (16a, 16b, 16c, 16d) z. B. Stabmagnete, aufweist, die symmetrisch um den Anker (7) herum verteilt angeordnet sind.

5. Magnetventil (1) nach einem der Ansprüche 1 bis 3, **dadurch gekennzeichnet, dass** die Permanentmagneteinrichtung (16) als ringförmiger, radial magnetisierter Permanentmagnet (16e) ausgebildet ist.

6. Magnetventil (1) nach einem der vorherigen Ansprüche, **dadurch gekennzeichnet, dass** die beiden Elektromagnetfelder (EM1, EM2) jeweils zwischen dem radial äußeren Joch (20, 21) und dem radial innenliegenden Anker (7) in radialer Richtung (R) durch die Permanentmagneteinrichtung (16) verlaufen.

7. Magnetventil (1) nach einem der vom Anspruch 3 abhängigen Ansprüche, **dadurch gekennzeichnet, dass** in dem Anker (7) ein Anker-Innenraum (29) ausgebildet ist, der in genau einer der Ankerstellungen (I) im Luftpfad zwischen den offenen Anschlüssen (2b, 2c) vorgesehen und/oder luftdurchströmt ist.

8. Magnetventil (1) nach einem der vorherigen Ansprüche, **dadurch gekennzeichnet, dass** einer der Kerne (12) ein inneres Rohr (12a) und ein äußeres Rohr (12b) und zwei Luftpfade (42, 43) aufweist, von denen ein Luftpfad (42) in dem inneren Rohr (12a) und der andere Luftpfad (43) zwischen den Rohren (12a, 12b) ausgebildet ist.

9. Magnetventil-Einrichtung (5), die aufweist:
ein Magnetventil (1) nach einem der vorherigen Ansprüche, eine Endstufe (30, 31) mit Schalteinrichtungen (T1, T2, T3, T4, T5, T6; Tr1, Tr2, Tr3, Tr4) zur Ansteuerung der Elektromagneteinrichtungen (18, 19) des Magnetventils (1), und
eine Steuereinrichtung (40) zur Ansteuerung der Schalteinrichtungen (T1, T2, T3, T4, T5, T6; Tr1, Tr2, Tr3, Tr4) der Endstufe (30, 31) für einen ersten Schaltvorgang (SV1) in die erste Ankerstellung (I) und einen zweiten Schaltvorgang (SV2) in die zweite Ankerstellung (II),
wobei die beiden Elektromagneteinrichtungen (18, 19) jeweils sowohl in dem ersten Schaltvorgang (SV1) als auch in dem zweiten Schaltvorgang (SV2) bestromt sind.

10. Magnetventil-Einrichtung (5) nach Anspruch 9, **dadurch gekennzeichnet, dass** die beiden Elektromagneteinrichtungen (18, 19) als Reihenschaltung oder Parallelschaltung geschaltet sind und durch die Steuereinrichtung (40) für den ersten Schaltvorgang (SV1) in einer ersten Richtung und für den zweiten Schaltvorgang (SV2) in einer der ersten Richtung entgegen gesetzten zweiten Richtung bestrombar sind.

11. Magnetventil-Einrichtung (5) nach Anspruch 9 oder 10, **dadurch gekennzeichnet, dass** die Endstufe (30) Highside-Treiber (Tr1, Tr2), z. B. Transistoren, aufweist, die zwischen einer oberen Versorgungsspannung (Uv) und den Elektromagneteinrichtungen (18, 19) geschaltet sind, und Low-side-Treiber (Tr3, Tr4), z. B. Transistoren, die zwischen den Elektromagneteinrichtungen (18, 19) und einer unteren Versorgungsspannung, z. B. Masse (GND), geschaltet sind,
wobei die Highside-Treiber (Tr1, Tr2) und die Lowside-Treiber (Tr3, Tr4) für die Schaltvorgänge (SV1, SV2) schaltbar, insbesondere alternierend umschaltbar, sind.

12. Magnetventil-Einrichtung (5) nach einem der Ansprüche 9 bis 11, **dadurch gekennzeichnet, dass** der kompensierende Strom (I_k) zeitlich veränderlich ist und erst nach einer Anfahr-Zeitspanne (Δ_t1) einen maximalen Stromwert (I_max) aufweist, vorzugsweise mit stetiger und/oder diskreter sprunghafter Erhöhung auf einem maximalen Stromwert (I_max).

13. Magnetventil-Einrichtung (5) nach einem der Ansprüche 9 bis 12, **dadurch gekennzeichnet, dass**
in dem zweiten Schaltvorgang (SV2) die erste Elektromagneteinrichtung (18) zur zumindest teilweisen Kompensation des ersten Permanentmagnetfeldes (PM1) mit einem geringeren ersten Strom (11) und die zweite Elektromagneteinrichtung (19) zur Verstärkung des zweiten Permanentmagnetfeldes (PM2) mit einem größeren zweiten Strom (12) bestrombar ist, und
in dem ersten Schaltvorgang (SV1) die zweite Elektromagneteinrichtung (19) zur zumindest teilweisen Kompensation des zweiten Permanentmagnetfeldes (PM1) mit einem geringeren zweiten Strom (I2) und die erste Elektromagneteinrichtung (18) zur Verstärkung des ersten Permanentmagnetfeldes (PM2) mit einem größeren ersten Strom (I1) bestrombar ist.

14. Verfahren zum Schalten eines bistabilen Magnetventils (1) nach einem der Ansprüche 1 bis 9, bei dem:
für einen zweiten Schaltvorgang (SV1) von der ersten Ankerstellung (I) in die zweite Ankerstellung (II)
die zweite Elektromagneteinrichtung (19) mit einem zweiten Strom (I2) bestromt wird zur Ausbildung eines schaltenden zweiten Elektromagnetfeldes (EM2), das das durch den Luftspalt (22) geschwächte zweite Permanentmagnetfeld (PM2) unterstützt, und die erste Elektromagneteinrichtung (19) zur Ausbildung eines kompensierenden ersten Elektromagnetfeldes (EM1) mit einem ersten Strom (11) bestromt wird, das das ohne Luftspalt ausgebildete erste Permanentmagnetfeld (PM1) zumindest teilweise kompensiert, und
entsprechend für einen ersten Schaltvorgang von der zweiten Ankerstellung (II) in die erste Ankerstellung (I) die erste Elektromagneteinrichtung (19) zur Ausbildung eines schaltenden ersten Elektromagnetfeldes (EM1) mit einem ersten Strom (I1) und die zweite Elektromagneteinrichtung (19) zur Ausbildung eines kompensierenden zweiten Elektromagnetfeldes (EM2) mit einem zweiten Strom (I2) bestromt wird.

15. Verfahren nach Anspruch 14, **dadurch gekennzeichnet, dass** in beiden Schaltvorgängen die beiden Elektromagnet-Einrichtungen (18, 19) in Reihe oder parallel geschaltet werden.

16. Verfahren nach Anspruch 14 oder 15, **dadurch gekennzeichnet, dass** zumindest der kompensierende Strom (I_K) des kompensierenden Elektromagnetfeldes zeitlich veränderlich und/oder zeitlich ansteigend in die Schalt- Elektromagneteinrichtung (19) eingesteuert wird und erst nach einer Anfahr-Zeitspanne (Δ_t1) einen maximalen Stromwert (I_max) erreicht.

17. Verfahren nach einem der Ansprüche 14 bis 16, **dadurch gekennzeichnet, dass** das kompensierende Elektromagnetfeld durch einen schwächeren kompensierenden Strom, z. B. mittels PWM-Taktung, angesteuert wird.

## Claims

1. Bistable solenoid valve (1) for a fluid system (50), wherein the bistable solenoid valve (1) has:
an armature (7), which is movable in an axial direction (A) between a first armature position (I) and a second armature position (II),
a first core (12) for supporting the armature (7) in the first armature position (I), and a second core (14) for supporting the armature (7) in the second armature position (II),
wherein the armature (7) is formed to be supported on in each case one of the cores (12, 14) so as to form an air gap (22) with respect to the other core (14, 12),
a first valve device (8, 9), closed in the first armature position (I), and a second valve device (10, 11), closed in the second armature position (II),
a permanent magnet device (16) for forming a first permanent magnetic field (PM1), which runs across a magnetic yoke (20, 21), the first core (12) and the armature (7), and a second permanent magnetic field (PM2), which runs across the magnetic yoke (20, 21), the second core (14) and the armature (7),
a first electromagnet device (18) for forming a first electromagnetic field (EM1), which runs across the magnetic yoke (20), the first core (12) and the armature (7),
a second electromagnet device (19) for forming a second electromagnetic field (EM2), which runs across the magnetic yoke (20, 21), the second core (14) and the armature (7),
**characterized in that**
the permanent magnet device (16) is magnetized in the radial direction relative to the axial direction (A).

2. Solenoid valve (1) according to Claim 1, **characterized in that** the permanent magnet device (16) is positioned radially outside the armature (7) and between the first coil (18) and the second coil (19).

3. Solenoid valve (1) according to Claim 1 or 2, **characterized in that** the solenoid valve (1) is embodied as a 3/2-way valve with a pressure input (2a), a first pressure output (2b) and a second pressure output (2c) as connections of the solenoid valve,
wherein, in the two armature positions (I, II), the first pressure output (2b) is connected in each case either to the pressure input (2a) or to the second pressure output (2c), and the respectively other connection (2c, 2a) is blocked.

4. Solenoid valve (1) according to one of the preceding claims, **characterized in that** the permanent magnet device (16) has a plurality of individual permanent magnets (16a, 16b, 16c, 16d), e.g. bar magnets, which are arranged in a manner distributed symmetrically around the armature (7).

5. Solenoid valve (1) according to one of Claims 1 to 3, **characterized in that** the permanent magnet device (16) is embodied as an annular, radially magnetized permanent magnet (16e).

6. Solenoid valve (1) according to one of the preceding claims, **characterized in that** the two electromagnetic fields (EM1, EM2) in each case run through the permanent magnet device (16) between the radially outer yoke (20, 21) and the radially inner armature (7) in the radial direction (R).

7. Solenoid valve (1) according to one of the claims which are dependent on Claim 3, **characterized in that** an armature interior space (29) is formed in the armature (7), said armature interior space being provided in precisely one of the armature positions (I) in the air path between the open connections (2b, 2c) and/or air flowing through said armature interior space.

8. Solenoid valve (1) according to one of the preceding claims, **characterized in that** one of the cores (12) has an inner tube (12a) and an outer tube (12b) and two air paths (42, 43), of which one air path (42) is formed in the inner tube (12a) and the other air path (43) is formed between the tubes (12a, 12b).

9. Solenoid valve device (5), which has:
a solenoid valve (1) according to one of the preceding claims,
an output stage (30, 31) with switching devices (T1, T2, T3, T4, T5, T6; Tr1, Tr2, Tr3, Tr4) for actuating the electromagnet devices (18, 19) of the solenoid valve (1), and
a control device (40) for actuating the switching devices (T1, T2, T3, T4, T5, T6; Tr1, Tr2, Tr3, Tr4) of the output stage (30, 31) for a first switching process (SV1) into the first armature position (I) and a second switching process (SV2) into the second armature position (II),
wherein current is applied to the two electromagnet devices (18, 19) in each case both in the first switching process (SV1) and in the second switching process (SV2).

10. Solenoid valve device (5) according to Claim 9, **characterized in that** the two electromagnet devices (18, 19) are connected as a series circuit or parallel circuit, and current can be applied to said electromagnet devices by the control device (40) in a first direction for the first switching process (SV1) and in a second direction, which is opposite to the first direction, for the second switching process (SV2).

11. Solenoid valve device (5) according to Claim 9 or 10, **characterized in that** the output stage (30) has high-side drivers (Tr1, Tr2), e.g. transistors, which are connected between an upper supply voltage (Uv) and the electromagnet devices (18, 19), and low-side drivers (Tr3, Tr4), e.g. transistors, which are connected between the electromagnet devices (18, 19) and a lower supply voltage, e.g. earth (GND),
wherein the high-side drivers (Tr1, Tr2) and the low-side drivers (Tr3, Tr4) can be switched, in particular can be switched over in alternation, for the switching processes (SV1, SV2).

12. Solenoid valve device (5) according to one of Claims 9 to 11, **characterized in that** the compensating current (I_k) is variable over time and has a maximum current value (I_max) only after a start-up time period (Δ_t1), preferably with a steady and/or discrete erratic increase to a maximum current value (I_max).

13. Solenoid valve device (5) according to one of Claims 9 to 12, **characterized in that**,
in the second switching process (SV2), a smaller first current (I1) can be applied to the first electromagnet device (18) for the purpose of at least partially compensating for the first permanent magnetic field (PM1), and a larger second current (12) can be applied to the second electromagnet device (19) for the purpose of intensifying the second permanent magnetic field (PM2), and,
in the first switching process (SV1), a smaller second current (12) can be applied to the second electromagnet device (19) for the purpose of at least partially compensating for the second permanent magnetic field (PM1), and a larger first current (I1) can be applied to the first electromagnet device (18) for the purpose of intensifying the first permanent magnetic field (PM2).

14. Method for switching a bistable solenoid valve (1) according to one of Claims 1 to 9, in which:
for a second switching process (SV1) from the first armature position (I) into the second armature position (II),
a second current (12) is applied to the second electromagnet device (19) for the purpose of forming a switching second electromagnetic field (EM2), which supports the second permanent magnetic field (PM2) weakened by the air gap (22), and a first current (I1) is applied to the first electromagnet device (19) for the purpose of forming a compensating first electromagnetic field (EM1), which at least partially compensates for the first permanent magnetic field (PM1) formed without an air gap, and,
correspondingly for a first switching process from the second armature position (II) into the first armature position (I), a first current (I1) is applied to the first electromagnet device (19) for the purpose of forming a switching first electromagnetic field (EM1), and a second current (12) is applied to the second electromagnet device (19) for the purpose of forming a compensating second electromagnetic field (EM2).

15. Method according to Claim 14, **characterized in that** the two electromagnet devices (18, 19) are connected in series or in parallel in both switching processes.

16. Method according to Claim 14 or 15, **characterized in that** at least the compensating current (I_K) of the compensating electromagnetic field is fed into the switching electromagnet device (19) in a manner variable over time and/or in a manner increasing over time and reaches a maximum current value (I_max) only after a start-up time period (Δ_t1).

17. Method according to one of Claims 14 to 16, **characterized in that** the compensating electromagnetic field is actuated by a weaker compensating current, e.g. by means of PWM clocking.

## Revendications

1. Electrovanne bistable (1) pour un système de fluide (50), dans laquelle l'électrovanne bistable (1) présente:
un induit (7), qui est déplaçable dans une direction axiale (A) entre une première position d'induit (I) et une seconde position d'induit (II),
un premier noyau (12) pour l'application de l'induit (7) dans la première position d'induit (I) et un second noyau (14) pour l'application de l'induit (7) dans la seconde position d'induit (II),
dans laquelle l'induit (7) est configuré en vue de l'application respectivement sur un des noyaux (12, 14) avec formation d'un entrefer (22) avec l'autre noyau (14, 12),
un premier dispositif de vanne (8, 9) fermé dans la première position d'induit (I) et un second dispositif de vanne (10, 11) fermé dans la seconde position d'induit (II),
un arrangement d'aimants permanents (16) pour la formation d'un premier champ magnétique permanent (PM1), qui s'étend à travers une armature magnétique (20, 21), le premier noyau (12) et l'induit (7), et d'un second champ magnétique permanent (PM2), qui s'étend à travers l'armature magnétique (20, 21), le second noyau (14) et l'induit (7),
un premier arrangement d'électroaimants (18) pour la formation d'un premier champ électromagnétique (EM1), qui s'étend à travers l'armature magnétique (20), le premier noyau (12) et l'induit (7),
un second arrangement d'électroaimants (19) pour la formation d'un second champ électromagnétique (EM2), qui s'étend à travers l'armature magnétique (20, 21), le second noyau (14) et l'induit (7),
**caractérisée en ce que** l'arrangement d'aimants permanents (16) est magnétisé en direction radiale par rapport à la direction axiale (A).

2. Electrovanne (1) selon la revendication 1, **caractérisée en ce que** l'arrangement d'aimants permanents (16) est positionné radialement à l'extérieur de l'induit (7) et entre la première bobine (18) et la seconde bobine (19).

3. Electrovanne (1) selon la revendication 1 ou 2, **caractérisée en ce que** l'électrovanne (1) est constituée par une vanne à 3/2 voies avec une entrée de pression (2a), une première sortie de pression (2b) et une seconde sortie de pression (2c) comme raccords de l'électrovanne, dans laquelle la première sortie de pression (2b) est respectivement raccordée dans les deux positions de l'induit (I, II) soit à l'entrée de pression (2a) soit à la seconde sortie de pression (2c) et l'autre raccord respectif (2c, 2a) est fermé.

4. Electrovanne (1) selon l'une quelconque des revendications précédentes, **caractérisée en ce que** l'arrangement d'aimants permanents (16) présente plusieurs aimants permanents individuels (16a, 16b, 16c, 16d), par exemple des barreaux aimantés, qui sont disposés de façon répartie symétriquement autour de l'induit (7).

5. Electrovanne (1) selon l'une quelconque des revendications 1 à 3, **caractérisée en ce que** l'arrangement d'aimants permanents (16) est constitué par un aimant permanent annulaire (16e), magnétisé radialement.

6. Electrovanne (1) selon l'une quelconque des revendications précédentes, **caractérisée en ce que** les deux champs électromagnétiques (EM1, EM2) s'étendent respectivement entre l'armature radialement extérieure (20, 21) et l'induit radialement intérieur (7) en direction radiale (R) à travers l'arrangement d'aimants permanents (16).

7. Electrovanne (1) selon l'une des revendications dépendant de la revendication 3, **caractérisée en ce qu'**une chambre intérieure d'induit (29) est formée dans l'induit (7), qui est prévue dans exactement une des positions d'induit (I) dans le chemin d'air entre les raccords ouverts (2b, 2c) et/ou qui est parcourue par de l'air.

8. Electrovanne (1) selon l'une quelconque des revendications précédentes, **caractérisée en ce qu'**un des noyaux (12) présente un tube intérieur (12a) et un tube extérieur (12b) et deux chemins d'air (42, 43), parmi lesquels un chemin d'air (42) est formé dans le tube intérieur (12a) et l'autre chemin d'air (43) est formé entre les tubes (12a, 12b).

9. Dispositif d'électrovanne (5), qui présente:
une électrovanne (1) selon l'une quelconque des revendications précédentes,
un étage final (30, 31) avec des dispositifs de commutation (T1, T2, T3, T4, T5, T6; Tr1, Tr2, Tr3, Tr4) pour la commande des arrangements d'électroaimants (18, 19) de l'électrovanne (1), et
un dispositif de commande (40) pour la commande des dispositifs de commutation (T1, T2, T3, T4, T5, T6; Tr1, Tr2, Tr3, Tr4) de l'étage final (30, 31) pour une première opération de commutation (SV1) dans la première position d'induit (I) et une seconde opération de commutation (SV2) dans la seconde position d'induit (II),
dans lequel les deux arrangements d'électroaimants (18, 19) sont respectivement activés aussi bien dans la première opération de commutation (SV1) que dans la seconde opération de commutation (SV2).

10. Dispositif d'électrovanne (5) selon la revendication 9, **caractérisé en ce que** les deux arrangements d'électroaimants (18, 19) sont connectés comme circuit série ou comme circuit parallèle et peuvent être activés par le dispositif de commande (40) pour la première opération de commutation (SV1) dans une première direction et pour la seconde opération de commutation (SV2) dans une seconde direction opposée à la première direction.

11. Dispositif d'électrovanne (5) selon la revendication 9 ou 10, **caractérisé en ce que** l'étage final (30) présente des pilotes côté haut (Tr1, Tr2), par exemple des transistors, qui sont connectés entre une tension d'alimentation supérieure (Uv) et les arrangements d'électroaimants (18, 19), et des pilotes côté bas (Tr3, Tr4), par exemple de transistors, qui sont connectés entre les arrangements d'électroaimants (18, 19) et une tension d'alimentation inférieure, par exemple la masse (GND), dans lequel les pilotes côté haut (Tr1, Tr2) et les pilotes côté bas (Tr3, Tr4) peuvent être commutés pour les opérations de commutation (SV1, SV2), en particulier inversés en alternance.

12. Dispositif d'électrovanne (5) selon l'une quelconque des revendications 9 à 11, **caractérisé en ce que** le courant de compensation (I_k) est variable dans le temps et ne présente une valeur de courant maximale (I_max) qu'après un laps de temps de démarrage (Δ_t1), de préférence avec une augmentation continue et/ou par sauts discrets jusqu'à une valeur de courant maximale (I_max).

13. Dispositif d'électrovanne (5) selon l'une quelconque des revendications 9 à 12, **caractérisé en ce que**
dans la seconde opération de commutation (SV2) le premier arrangement d'électroaimants (18) peut être activé par un premier courant moins élevé (I1) pour la compensation au moins partielle du premier champ magnétique permanent (PM1) et le second arrangement d'électroaimants (19) peut être activé avec un second courant plus élevé (12) pour l'augmentation du second champ magnétique permanent (PM2), et
dans la première opération de commutation (SV1) le second arrangement d'électroaimants (19) peut être activé par un second courant moins élevé (12) pour la compensation au moins partielle du second champ magnétique permanent (PM1) et le premier arrangement d'électroaimants (18) peut être activé avec un premier courant plus élevé (I1) pour l'augmentation du premier champ magnétique permanent (PM2).

14. Procédé de commutation d'une électrovanne bistable (1) selon l'une quelconque des revendications 1 à 9, dans lequel:
pour une seconde opération de commutation (SV1) de la première position d'induit (I) à la seconde position d'induit (II), on active le second arrangement d'électroaimants (19) avec un second courant (12) pour la formation d'un second champ électromagnétique de commutation (EM2), qui soutient le second champ magnétique permanent (PM2) affaibli par l'entrefer (22), et on active le premier arrangement d'électroaimants (19) avec un premier courant (I1) pour la formation d'un premier champ électromagnétique de compensation (EM1), qui compense au moins partiellement le premier champ magnétique permanent (PM1) formé sans entrefer, et
de façon correspondante pour une première opération de commutation de la seconde position d'induit (II) à la première position d'induit (I) on active le premier arrangement d'électroaimants (19) avec un premier courant (I1) pour la formation d'un premier champ électromagnétique de commutation (EM1) et on active le second arrangement d'électroaimants (19) avec un second courant (12) pour la formation d'un second champ électromagnétique de compensation (EM2).

15. Procédé selon la revendication 14, **caractérisé en ce que** les deux arrangements d'électroaimants (18, 19) peuvent être connectés en série ou en parallèle dans les deux opérations de commutation.

16. Procédé selon la revendication 14 ou 15, **caractérisé en ce que** l'on commande au moins le courant de compensation (I_k) du champ électromagnétique de compensation de façon variable dans le temps et/ou de façon croissante dans le temps dans l'arrangement d'électroaimants de commutation (19) et on n'atteint qu'après un laps de temps de démarrage (Δ_t1) une valeur de courant maximale (I_max).

17. Procédé selon l'une quelconque des revendications 14 à 16, **caractérisé en ce que** l'on commande le champ électromagnétique de compensation par un courant de compensation plus faible, par exemple au moyen d'une fréquence PWM.
